# EUROPEAN PATENT SPECIFICATION

(11) **EP 2 386 011 B1**
(45) Date of publication and mention of the grant of the patent: **21.11.2012**
(21) Application number: 10700334.5
(22) Date of filing: 07.01.2010
(51) Int. Cl.: E21B 41/00, E21B 47/00, E21B 47/01, E21B 47/06, E21B 47/10, E21B 47/12

(54) **PRESSURE MANAGEMENT SYSTEM FOR WELL CASING ANNULI**
DRUCKVERWALTUNGSSYSTEME FÜR EINEN BOHRLOCHVERROHRUNGSRINGRAUM
SYSTÈME DE GESTION DE PRESSION POUR ESPACE ANNULAIRE DE TUBAGE DE PUITS

(30) Priority: 09.01.2009 GB 0900348; 25.11.2009 GB 0920672
(43) Date of publication of application: 16.11.2011
(73) Proprietor: Sensor Development AS, 3241 Sandefjord (NO)
(72) Inventor: GODAGER, Oivind, N-3222 Sandefjord (NO)
(74) Representative: Copsey, Timothy Graham
(86) International application number: PCT/GB2010/000014
(87) International publication number: WO 2010/079327

(56) References cited:
- WO-A1-01/65069
- WO-A1-03/056692
- WO-A1-2007/071975
- US-A1- 2006 005 965
- US-A1- 2008 106 972

## Description

This invention relates to a method and apparatus for the management of the pressure containing integrity of oil and gas production, injection and observation wells. More particularly, this invention relates to a method and apparatus to accurately monitor in-situ the pressure and/or temperature in one or more well casing annuli without compromising the integrity of the well or well design in any way.

The invention leads to better control and understanding of any pressure/temperature excursions inside a well casing annulus as the method and apparatus proposed enable distinguishing whether a change in containment pressure and temperature is caused by process or environmental fluctuations, or by a hazardous pressure leak from the well. Thus, the invention enhances the risk management and safety of the well as well as the surrounding environments, permitting any required action to be taken earlier to avoid hazardous events. This can last over the lifetime of the well.

The management of the pressure containing integrity of oil and gas wells constitutes an on-going concern of the petroleum industry. Those concerns are mainly due to the enormous monetary expenses involved in manufacturing and running any type of petroleum well as well as the risks associated with its environmental and safety issues. Herein, a petroleum type well is defined as any type well being drilled and equipped for the purpose of producing or storage of hydrocarbon fractures from or to subsurface formations. Further, petroleum type wells are categorized as any of combination, storage, observation, producing or injection type wells.

The control and access of the petroleum well is provided through a wellhead. Thus, the service of the wellhead and its configuration provides a natural target structure for both prior art and the state-of-the-art technology in order to monitor and control the pressure of the plurality of well casing annuli surrounding the production tube or well. The present invention has applications to any petroleum type wells, for example located on land, on a platform or at the seabed. However, for simplicity and to facilitate uniform understanding of the present invention is described herein particularly as it relates to a generic type petroleum well and wellhead.

Management of the pressure containing integrity of the well has become particularly more important and more complex as the close or surrounding annuli (i.e. annulus-A) of the producing tubing or conduit is being used more and more been actively to assist or help the production of a well. By this we mean the well design is such that you utilize Annulus-A (space) as the conduit for the supply of gas for the well artificial gas lift system. In these applications, the immediate annular space (annulus-A) surrounding the production well no longer operates as and provides a barrier and/or safety design feature as of a traditional or prior art petroleum type well. Annulus-A is now being integrated as a part of and process element of the newer petroleum well production system. This in turn, forces the well designer to move the "active" annular barrier of the well, one or more further steps outwards and away from the production tubing (i.e. to annulus-B or C etc).

Using the annular spaces of petroleum wells as an active part of the process system as described above requires a review of the safety and integrity of the entire well design. Previously, it was relatively straightforward to measure and monitor pressure and temperature of the immediate annular space of petroleum wells as the access to Annulus-A could be obtained through the side of the wellhead housing or through the tubing hanger. Annulus-B, on the other hand, is more complicated as it is physically terminated deeper down inside the wellhead housing and its access terminated and securely sealed by the respective casing hanger. The reality in existing designs is that there is no easy or direct access to the outer annular spaces (i.e. annulus- B, C, D...) unless one selects to make some arrangement that will compromise the integrity of the pressure containment. This may be by means of puncturing the wall of the "barrier" (i.e. the wellhead housing, casing hanger) in some way to get hydraulic access in order to the monitor the pressure of the void space by placement of some kind of known pressure or temperature sensing device.

There are numerous prior art patents related to the measurement of pressure in well casing annuli. One system is described by US6,513,596B2. The system described is illustrative in nature and shows a well data monitoring system with sensors placed inside the outer annuli of a well casing program. The system is a non-intrusive approach to measure pressure and other parameters within a plurality of annuli space and preserves the pressure containing integrity of the well. The system shows sensors placed inside the annuli that communicate with an interrogation system located externally or internally of the wellhead housing. It confirms that the sensors will require power and communication to perform their operation and lists generally alternative sources to power and methods of communication without solving the actual challenges how to implement it in real world application. This method is not believed to have been installed in any petroleum well or field.

US 3,974,690 illustrates a method and apparatus to measure annulus pressure in a well. The method is mechanically complicated as it includes a moveable element that is operated in a differential pressure cell mode. The measuring side of the cell is exposed to the measurand (i.e. the pressure in annulus) while the other side of the cell is exposed to the pressure charge of a pressure chamber. The movable element moves and stops when the pressure of the chamber equals that of the annuli. The method involves an electric control cable that is used to excite and read the position of the element. The control cable is hung by some means in the center of the tubing and from there run out of the well.

Firstly, primary elements that are movable are not favorable in petroleum well applications as they may become loose and result in damage to the well. Secondly, a cable coming out of the process tubing of a well is not contributing to maintaining required pressure integrity or safety of a well. Based on this fact it:is difficult to see this system being used in practice to permanently monitor the pressure containment integrity of a petroleum well and must be considered a system of preliminary or provisory means only.

A third patent illustrates an approach by hydraulic communication or access means. US4,887,672 discloses a system that uses hydraulic couplers, internally drilled holes, and associated pressure ports to monitor the pressure containment integrity of the well. Orientation of the couplers prior to the wellhead makeup is critical and the couplers may easily be damaged. Further, each pressure port is subject to leak and increases the overall safety risk of the well.

Another related approach is described by EP 1662673 Al. The method described by this is magnetic saturation of the well casing or conduit to make a "window" for operating locally an AC magnetic field to excite a sensor located outside a casing. The principle described is not considered realistic due to a relatively high power consumption required to magnetically saturate the well casing. Further, the method would require uniform current flux within the material to be saturated which in turn would require optimum contact (evenly distributed contact resistance over the exposed area) performance of the electrodes implied. Due to combination of exposed electrodes and high currents, such system would rapidly degrade due to galvanic reactions (oxidation/corrosion) inside the pressure containment system of a well. Thus, the method is considered non-applicable for a prescribed permanent pressure management application.

US2006/0005965 which is considered the closest prior art, discloses a sensor system in which a sensor body is installed in a hole formed in the casing of tubing to extend between the inside and outside of the casing or tubing, the sensor elements being capable of sensing properties of an underground formation surrounding of the well.

WO01/65069 discloses a power supply apparatus for supplying power and communications within a piping structure such that an external power transfer device is magnetically coupled to an internal power transfer device within separate piping structures.

US2008/0106972 discloses the use of elastodynamic waives to communicate between sensors deployed in a formation and a hub located in the well or at the outer surface of the casing.

WO2007/071975 discloses a device for generation of electrical power from a fluid flow, for example for harvesting power from flows downhole in oil and gas wells.

An aspect of the present invention provides a method and apparatus for pressure management of a plurality of well casing annuli. In certain applications the outer annuli between the well casings needs pressure monitoring to ensure the well is being operated is a safe manner. Traditionally, only the annuli between the production tubing and the inner casing (production casing), has been monitored. Some applications of new production methods make use of the traditional annuli space (annulus-A) as live elements of their process system. Consequently, new regulatory requirements arise and a need to move the traditional production casing barrier and well integrity outwards follows. The present invention discloses a non-intrusive method that preserves the pressure integrity of the well at the same time as it contributes to its safety.

A second aspect of the invention is that the pressure management system is able to predict the future pressure/temperature profile of the annuli space as function of load changes. Typically load changes are caused by fluctuations in the process or environment, which in turn induce pressure changes inside the pressure containment system of a well. Such changes are not hazardous in their origin and the ability to address them will contribute to the safety assessment of the well. As a result, the real-time acquisition of process and environment data in combination with the in-situ measurements constitutes an important advance over prior art in that the present invention can help management to anticipate and react to potential problems before they occur. In addition, the remote sensor package can be dressed with numerous and different evaluation sensors that may be important to evaluate the status and integrity of a plurality of well pressure containment systems.

In accordance with one aspect of the present invention is a Wireless Sensor Unit (WSU). The WSU is a non-intrusive permanent management system provided for monitoring the pressure containment integrity of a well. A feature of the WSU is that it contains a Sensor Package (SP) that permanently monitors pressure and temperature without compromising any of the pressure integrity barriers of the well casing annuli in any way. The SP is specific for the application and consists of a set of highly accurate quartz pressure and temperature sensor crystals and produces outputs of pressure, temperature as well as temperature gradients (i.e., change). In turn, the SP is connected to an Electromagnetic Transceiver (ET) of which includes circuitry for two-way communication and power harvesting. Both the SP and the ET is attached or integrated to the outer perimeter of a Non-Magnetic Casing Section (NMCS) of which is part of the well casing program (barrier).

Another aspect of the present invention is a Sensor Energizer Unit (SEU) and is typically part of or attached to the well completion tubing. The SEU is adapted to host the Wireless Sensor Unit. The SEU consists of three main elements. The first and main element of the SEU is an Electromagnetic Armature (EA), second; an Adjustable Mandrel (AM), and third; a Cable Adaptor (CA). The EA provides as a combination both a power source and communications link for the WSU. The principal transmission of the EA is by low frequency induction or electromagnetic (EM) means, which is picked up and converted to electric energy by the WSU. To ensure optimum efficiency vise versa the WSU, the EA is attached to the AM, which enhances the facility to "fine tune" or optimize the efficiency to host the WSU by vertical adjustment means. Attached to the EA is also a Cable Adaptor (CA) connecting the control cable from outside of the well. The control cable is attached to the completion tubing by traditional cable clamps and exits the well through the wellhead, all according to prior art means. Typically, the control cable is a single-conductor Tubing Electric Cable (TEC) type, providing power to the SEU as well as and communication between the mentioned and the monitoring facilities (i.e., outside the well).

For practical reasons the EA may be attached to an Adjustable Mandrel (AM) that provides freedom of vertical adjustment/positioning of the EA in respect to the WSU. The freedom of vertical adjustment after being attached to the process tubing enables the operators involved to position it in the exact position adjacent to the WSU in the well without introducing "space-out" complexity, involving the completion or process tubing inside the well. Thus, the purpose of the AM is two-fold, first: to provide a holder, carrier and/or protector for the EA, and secondly: to allow vertical adjustment so the two main elements of the invention (i.e., the WSU and the SEU) are correctly arranged in relation to one another.

Depending on the degree of risk assessment required, the SEU may also include a Sensor Package (SP) equal to that of the WSU to enhance more complex evaluation of the integrity of its pressure containment system.

According to one aspect of the present invention, there is provided apparatus to provide monitoring of pressure outside the wellbore casing of a well, said apparatus comprising: a Wireless Sensor Unit (WSU), placed outside a section of a non-magnetic casing, said WSU including a sensor device to measure the pressure and/or the temperature of its surroundings, in which the WSU may be installed or positioned at any elevation of the wellbore and wherein the WSU is powered by Power Harvesting where the frequency of the induction signal is in the range of 10-1000 Hz for deep penetration through the non-magnetic casing; an internal Sensor Energizer Unit (SEU) placed inside the wellbore casing, said SEU being used for power and communication with the WSU, and wherein the SEU is attached to the well tubing or completion program by tubing having a thread that allows adjustment of its elevation, and wherein SEU converts the dc power supplied on a cable from the surface to an alternating electromagnetic field that provides source of power for the WSU outside the casing; wherin the SEU and WSU use an electromagnetic modulation technique to provide communication of data between the two components.

The SEU may be arranged to be at the same elevation as that of the outer WSU. Further, the sensor may be mounted near the wellhead or tree structure of the wellbore. There may be two or more sensors in the WSU, and all sensors of the WSU may be placed on the outside of the wellbore casing without compromising the pressure integrity of the well.

The pressure sensors preferably measure one or more parameters of the annuli to which it is exposed. The sensors may be branched-off from the WSU and connected to a common electrical wire harness attached to the outside of the casing. The wiring harness may be either a single or multi- conductor type downhole cable (TEC).

The apparatus may further comprise one or more power harvesting coils spaced out over a given section of the non magnetic casing and the WSU may include or be connected to a secondary energy source. This source may be either a battery or a downhole generator.

The SEU may optionally further include one or more sensors to measure parameters inside the wellbore casing or tubing to which it is attached. The sensors may be an integral part of the SEU, or be branched-off from the SEU and connected to a common electrical wiring harness, or be connected by a combination of integral sensor and sensors branched-off. The wire harness may be a single or multi- conductor type downhole cable (TEC).

The sensors optionally measure one or more of the following properties: pressure, temperature, flow quantity, flow velocity, flow direction, turbidity, composition, oil level, oil-water interface level, density, salinity, radioactivity, displacements, vibrations, pH, resistivity, sand content, thermal conductivity, or any combination of the above. They may also measure one or more of the following structural properties of the wellbore casing or tubing: shock, vibrations, inclinations, magnetic properties, electrical properties, tool-face or other type of tool orientation, as well as stress and strain properties or any combination of the above. They may further measure one or more annuli or open hole properties on the outside of the wellbore, which properties may be selected from: pressure, temperature, resistivity, density, ph, electro- magnetic and/or electrical fields, radioactivity, salinity, sound, sound velocity, thermal conductivity, as well as other chemical and physical properties.

The apparatus may further comprise means to induce a response from the surroundings, which means may be selected from: a magnetic field source, an electric field source, sound waves, pressure, temperature, shear-force waves, other final element or actuator part of downhole process control, final element or actuator used towards formation to assist any of above listed measurements

The apparatus may further comprise one or more of: noise cancelling of parameter offsets due to offset created by the well process or environment; prediction and correction of measurements due to gradients induced by the environment or well process system, in order to provide correct as well as real-time monitor of the pressure integrity and status of the well.

The invention also extends to a method of monitoring pressure outside a wellbore casing of a well, said method comprising:
installing a Wireless Sensor Unit (WSU) including a sensor device at a location on the outside section of a non-magnetic casing of a wellbore;
installing an internal Sensor Energizer Unit (SEU) inside the wellbore casing at an elevation which is the same as the WSU outside the wellbore, wherein the SEU is used for power and communication with the WSU;
powering the WSU by Power Harvesting where the frequency of the induction signal is in the range of 10-1000 Hz for deep penetration through the non-magnetic casing;
converting the dc power supplied to the SEU on a cable from the surface to an alternating electromagnetic field that provides source of power for the WSU outside the casing;
using an electromagnetic modulation technique to provide communication of data between the SEU and the WSU.

Optional and preferred features of the apparatus as discussed above apply equally to the method of the present invention and will be discussed further in the specific description below.

The above-discussed and other features and advantages of the present invention will be appreciated and understood by those skilled in the art from the detailed description and drawings. Referring now to drawings, wherein like elements are numbered alike in the several FIGURES.
FIGURE 1 is a diagrammatic view depicting the Pressure Management System for Well Casing Annuli of the present invention for use in management and risk assessment of a plurality of petroleum well applications;
FIGURE 2 shows an enlarged diagrammatic view of one aspect of FIGURE 1 depicting the Wireless Sensor Unit (WSU);
FIGURE 3 shows an enlarged diagrammatic view of another aspect of FIGURE 1 depicting the Sensor Energizer Unit (SEU);
FIGURE 4 shows a simplified electrical block diagram of the Pressure Management System in accordance with the present invention;
FIGURE 5 is a diagrammatic view similar to figure 1, but showing the use of multiple sensors on either side of the wellbore casing; and
FIGURE 6 is a block diagram showing a sensor network running from a single

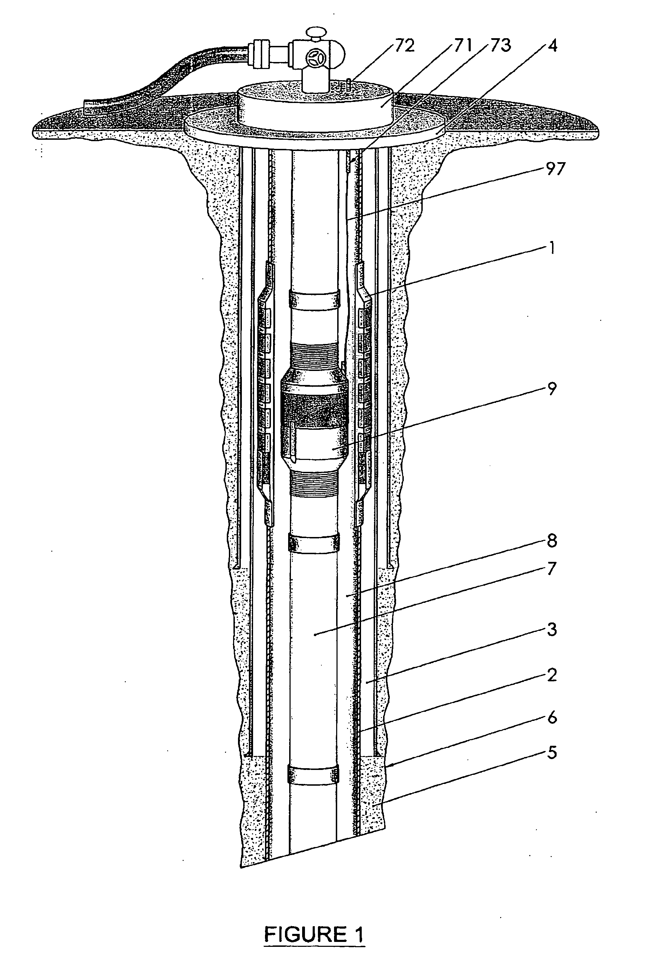

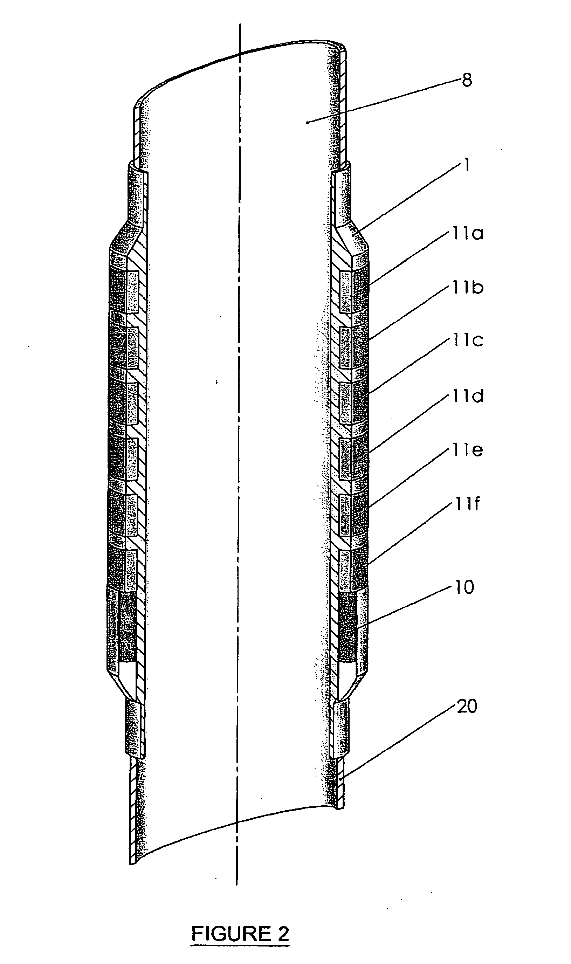

This invention relates to a system for monitoring the pressure integrity of well casing annuli. The annulus to monitor is typically the barrier that is closest to the well production system in order to avoid leaks and enhance safe operation. In particular a Wireless Sensor Unit (WSU) 1 in the present invention is made part of the casing program of the main production barrier 2 of the well. The casing section 20 (see figure 2) of the WSU 1 is made in a non-magnetic material and hosts a Sensor Package 10 and a plurality of Electromagnetic Transceivers (11 a-f). For the purpose of this invention the Sensor Package is configured to measure and monitor the annular space 3 outside the main barrier of the well producing system as illustrated in Figure 1.

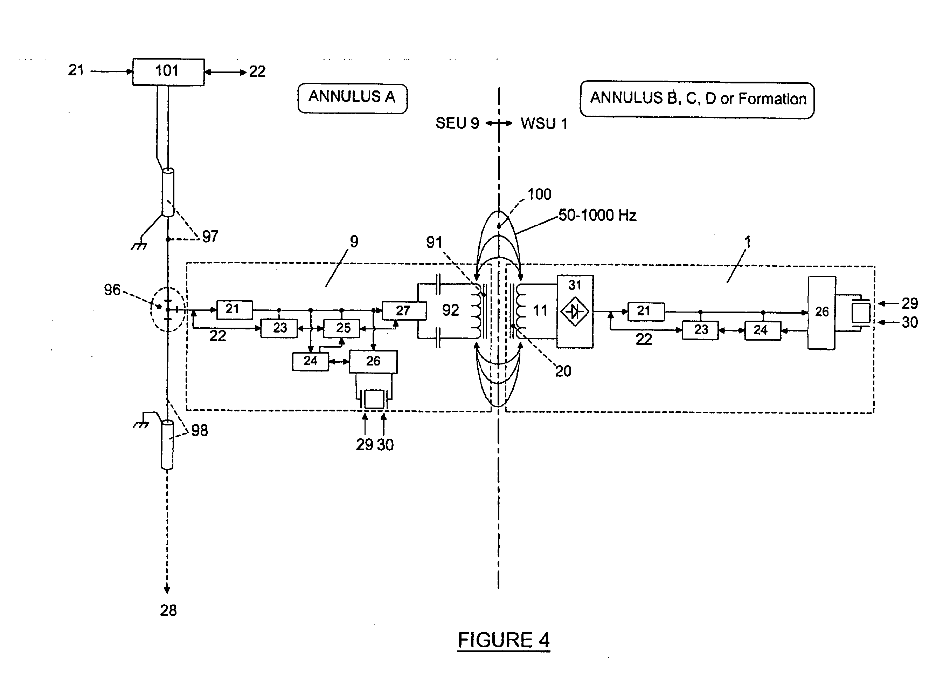

Referring to Figure 1 this space 3 is also often referred to as Annulus-B and the WSU 1 is typically positioned close to and underneath the wellhead structure or housing 4. The wellhead structure is shown here in context, with reference numeral 5 depicting the earth through which the well has been bored, where 6 depicts the wellbore. The WSU 1 is wirelessly powered by Sensor Energizer Unit (SEU) 9 by electromagnetic means, also referred to as "power harvesting" (referred to as reference numeral 100 in Figure 4) by those who are skilled in the art of electrical engineering. The WSU 1 is provided with supervisory circuits, that enables two-way communications with the SEU 9. In turn, the communication is by electromagnetic means.

Figure 2 shows the main elements of one component of the present invention in greater detail, which together define the configuration of the Wireless Sensor Unit 1. The WSU 1 consists of a Sensor Package (SP) 10, an Electromagnetic Transceiver (ET) 11a-f, and a Non-Magnetic Casing Section (NMCS) 20. A more detailed connection and function diagram of the WSU 1 is illustrated on the right hand side of the dotted line of Figure 4.

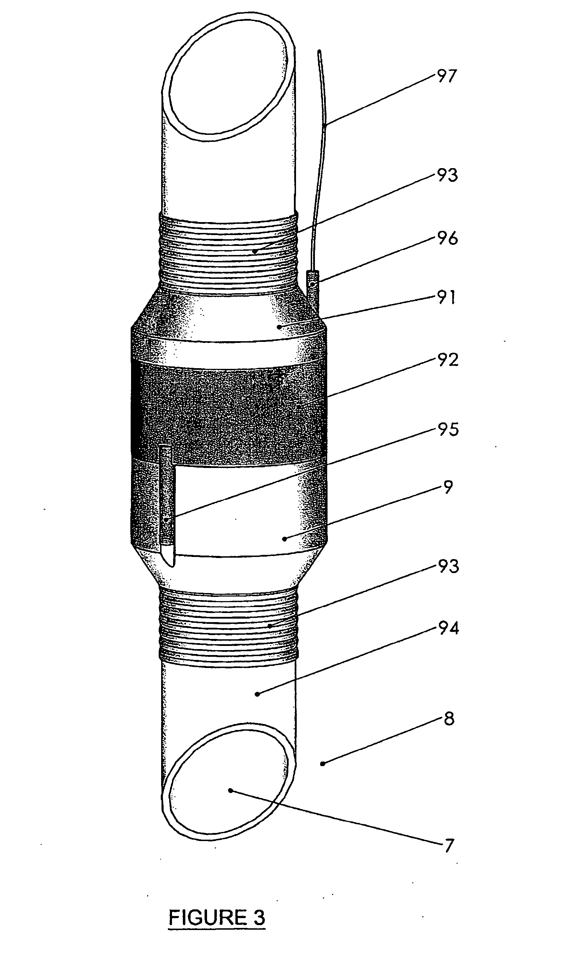

Again referring to Figure 1, a second component of the present invention is the Sensor Energizer Unit (SEU) 9. The SEU 9 is shown in greater detail in Figure 3 and is typically mounted to a mandrel 91 and attached to a section of the production tubing 94. For the present illustration production tubing 94 is provided with an external thread 93 although this could equally be an internal thread. The thread 93 allows the elevation of the SEU 9 to be adjusted so that the elevation of SEU 9 in the well corresponds exactly with the elevation of the WSU 1. This will ensure proper communication as well as providing optimum efficiency of the power harvesting (reference 100 in Figure 4).

Power supply and communications for the SEU 9 are provided through the Tubular Electric Cable (TEC) 97 which is attached to the process tubing 7 and feed through 72 and 73, typically exiting at the tubing hanger 71 (see Figure 1). The SEU 9 may also host a Sensor Package 95, which in principle may be the same as Sensor Package 10 of the WSU 1 but may be configured to read parameters of the inner annuli 8. Typically, the inner annulus 8 is often referred to as Annulus-A by those skilled in the art.

Referring to figures 3 and 4, power to the SEU 9 is provided from the well site mounted Downhole Interface Unit (DIU) 101 through cable TEC conduit 97. The TEC 97 also hosts the communication in and out of the well between the DIU 101 and the SEU 9. Typically the communication is by means of a superimposed signal onto the power as the TEC 97 is a single-conductor cable. TEC 97 is terminated at the SEU 9 at the Cable Adaptor 96. Power is routed internally through the mandrel 91 and connected to the Electromagnetic Armature (EA) 92. A detailed description of the internal electronic functions and routing is given in figure 4, on the left hand side of the dotted line.

Also, if required, a Sensor Package (SP) 95 may be adapted to provide more data for the evaluation of the pressure integrity of the annuli of interest. SP 95 may be the same as the SP 10 of the WSU but may alternatively be any kind of sensor capable of providing data to enhance the safety and risk assessment of a particular well. For example, the sensor 95 could measure one or more of the following properties: pressure, temperature, flow quantity, flow velocity, flow direction, turbidity, composition, oil level, oil-water interface level, density, salinity, radioactivity, displacements, vibrations, pH, resistivity, sand content, thermal conductivity, as well as other chemical and physical properties.

As mentioned above, EA 92 and SP 95, may be attached to mandrel 91. The Mandrel 91 serves as both a holder for and protection of the mentioned elements and allows for adjustment to match the vertical position or elevation of WSU 1. The adjustment range of the present invention is typically in the range 0-50 cm, for example 10-40 cm or 25-35 cm, but may be more or less depending on the requirement to provide freedom of proper space-out for the installation. Both the mandrel 91 and the process tubing 94 may be manufactured in a magnetic material.

Referring now to Figure 4, this is a simplified electronic block diagram of the present invention and is provided for those skilled in the art in order to visualize the inherent architecture as well as operation of the system. As may be seen from the block diagram one or more SEU 9 units may be attached to the control cable 97. In this Figure this is illustrated using additional TEC 98, leading to additional SEU units shown by 28. In a multi-unit system (i.e., two or more SEU 9 units), each SEU is connected in a parallel configuration onto the cable 97. Due to relatively high power consumption, the nature of the system is also that only one SEU unit is active at a time.

The active status of a SEU is addressed during the initial start-up and through a command issued by the DIU 101 at the well site. At power-up the DIU actively addresses one of the SEU units 9 on the line and makes it the active node of the system. To change to another SEU, the DIU simply powers-down the line to reset or resume. At the next power-up another SEU may be addressed. Using this mode of operation, power is directed to one SEU at a time and the system is capable of hosting many SEU units on the line without gross voltage drop on the cable due to heavy loads.

Power harvesting 100 is achieved by correct vertical alignment of the SEU 9, in relation to the WSU 1. As mentioned above, this adjustment is provided by the adjustable mandrel 91. A second feature of this invention is the use of the non-magnetic casing section (NMCS) 20 which makes the lower frequency (50 - 1000 Hz) electromagnetic field induced by the Electromagnetic Armature (EA) 92 deep penetrating, and thus visible to the Electromagnetic Transceiver (ET) 11 of the WSU 1. The efficiency of the power transfer is poor due to non-ideal conditions of the induction coupling, however tests show that a ratio in the range of 20:1 is achievable and is sufficient to operate a low-power sensor package as described in the present invention.

Referring again to Figure 4 in detail, the SEU 9 consists of a Power Supply 21 that provides a regulated dc current for the electronic functions of the unit. The SEU is supervised by the internal Controller 25. Upon a wake-up call, the Controller makes the address interpretation and when addressed it turns on the internal Modulating Chopper Oscillator 27. The MCO converts electrical energy into an alternating magnetic field through the Electromagnetic Armature 92. The induced field has a frequency that enables electromagnetic waves to propagate deeply into the surrounding structures, and thereafter be picked up by the Electromagnetic Transceiver (ET) 11 a-f of the WSU 1. The MCO also assists in modulating data 22 in between the SEU and the WSU.

The SEU also has a Modem 23. The main purpose of the Modem is to read and transmit data 22 from/to the power line 97. However, data 22 in and out of the SEU is buffered and interpreted by the internal Controller 25. The Crystal Sensors (for example, for detecting pressure 29 and temperature 30) of the described device are driven by the respective Oscillators 26 and each sensor crystal provides a frequency output as function of its measurand. The sensor frequency is measured by the Signal Processor 24 and is continuously feed to an input buffer of the Controller 25.

For the WSU 1, the internal electronic functions are equivalent to those for the SEU 9 with the exception of the Rectifying Bridge 31. The Rectifying Bridge converts the alternating current induced by the local electromagnetic field into a dc voltage/current that internally powers the WSU 1. The prescribed electromagnetic principle used is referred to as Power Harvesting 100 by persons skilled in the art. For the purpose of this invention, the WSU 1 is provided with highly accurate pressure 29 and temperature 30 sensors. In principle the WSU 1 may include a Sensor Package that may hold any kind of sensors to measure a plurality of measurement parameters to enhance the risk assessment of the pressure containment system of a well.

Figures 1to 4 have generally shown a system including either a single sensor within the SEU or two sensors, one within the SEU and the other in the WSU.

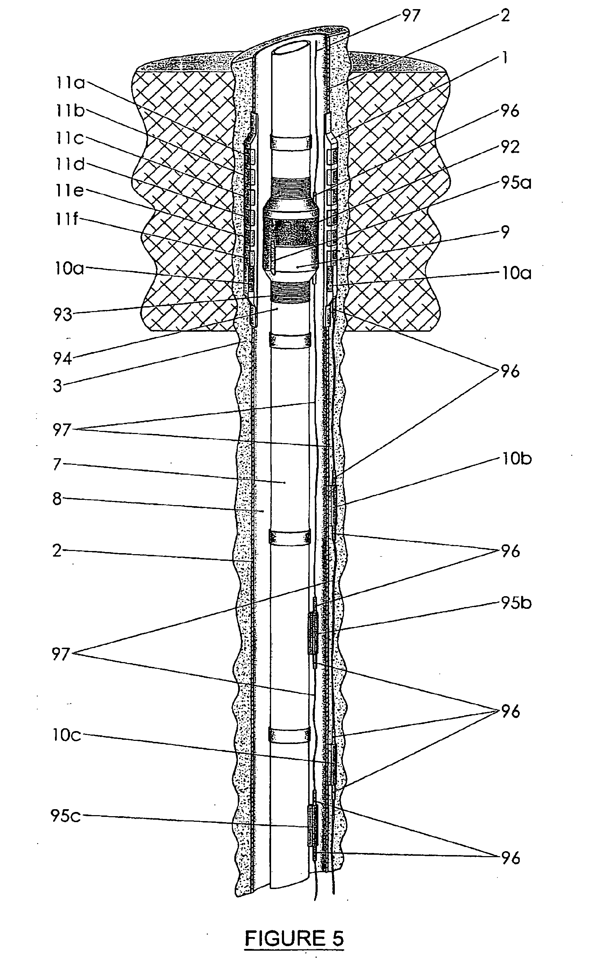

Figure 5 shows the system described by Figure 1 expanded to include more sensors on either side of the wellbore casing. Similar reference numerals are used for similar features as in Figures 1 to 4. On the inside, branched-off from the SEU are sensors 95a, 95b and 95c, for example, and on the outside, branched-off from the WSU are further sensors 10a, 10b and 10c, for example.

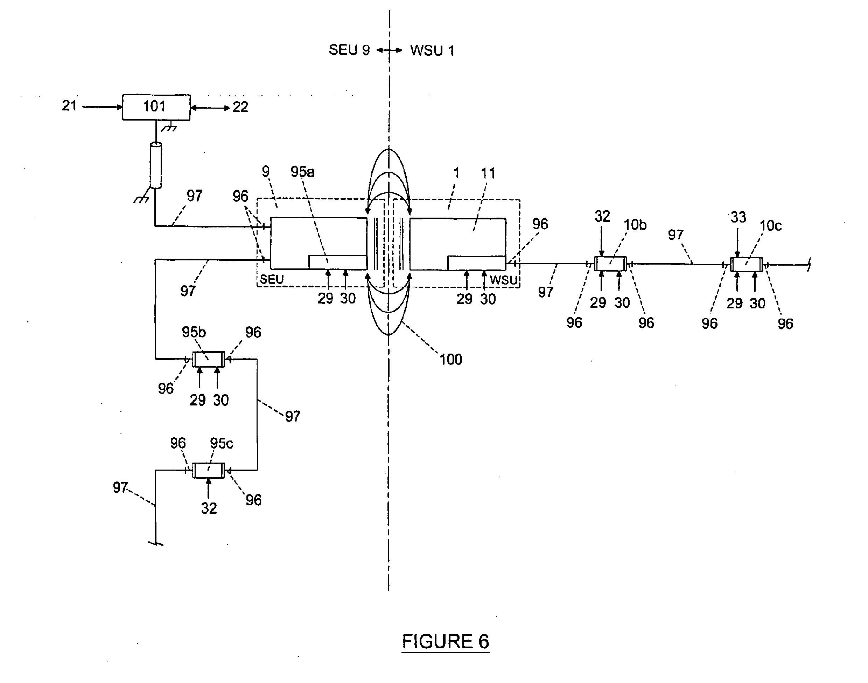

Figure 6 is the corresponding schematic block diagram showing the multiple sensors networked to operate from a single-node and illustrates the cascading of sensors on both sides of wellbore casing. Referring to Figure 6, the sensors are depicted measuring open hole properties, for example, pressure 29, temperature 30, resistivity 32, and the oil/water interface level 33.

## Claims

1. Apparatus to provide monitoring of pressure outside the wellbore casing (2) of a well, said apparatus comprising:
a Wireless Sensor Unit (WSU) (1), placed outside a section of a non-magnetic casing (20), said WSU including a sensor device (10) to measure the pressure and/or the temperature of its surroundings, in which the WSU (1) may be installed or positioned at any elevation of the wellbore (6) and wherein the WSU (1) is powered by Power Harvesting (100) where the frequency of the induction signal is in the range of 10-1000 Hz for deep penetration through the non-magnetic casing (20);
an internal Sensor Energizer Unit (SEU) (9) placed inside the wellbore casing (2), said SEU being used for power and communication (100) with the WSU (1), and wherein the SEU (9) is attached to a well tubing or completion program by tubing (7) having a thread (93) that allows adjustment of its elevation, and wherein SEU (9) converts the dc power supplied on a cable (97) from the surface to an alternating electromagnetic field (100) that provides a source of power for the WSU (1) outside the casing (2);
wherein the SEU (9) and WSU (1) use an electromagnetic modulation technique to provide communication of data between the two components.

2. Apparatus as claimed in claim 1, in which the SEU (9) is arranged to be at the same elevation as that of the outer WSU (1).

3. Apparatus as claimed in claim 1 or claim 2, in which the sensor (10) is mounted near the wellhead or tree structure of the wellbore.

4. Apparatus as claimed in any preceding claim, in which there are two or more sensors (10) in the WSU (1), and in which all sensors (10 a, b, c) of the WSU (1) may be placed on the outside of the wellbore casing without compromising the pressure integrity of the well.

5. Apparatus as claimed in any preceding claim, in which the pressure sensors (10a, b, c) measure one or more parameters of the annuli (3, 8) to which it is exposed.

6. Apparatus as claimed in any preceding claim, in which the sensors (10) are branched-off from the WSU (1) and connected to a common electrical wire harness (97) attached to the outside of the casing (2), the wiring harness (97) being either a single or multi- conductor type downhole cable (TEC).

7. Apparatus as claimed in any preceding claim, further comprising one or more power harvesting coils (11 a-f) spaced out over a given section of the non magnetic casing (2).

8. Apparatus as claimed in any preceding claim, in which the WSU (1) includes or is connected to a secondary energy source, such as a battery or a downhole generator.

9. Apparatus as claimed in any preceding claim, in which the SEU (9) further includes one or more sensors (95) to measure parameters inside the wellbore casing (2) or tubing (7) to which it is attached, and wherein the sensors (95) may be an integral part of the SEU (9), or branched-off from the SEU (9) and connected to a common electrical wiring harness (97), or a combination of integral sensor and sensors branched-off, and wherein the wire harness (97) may be a single or multi- conductor type downhole cable (TEC).

10. Apparatus as claimed in any preceding claim, in which the sensors measure one or more of the following properties: pressure, temperature, flow quantity, flow velocity, flow direction, turbidity, composition, oil level, oil-water interface level, density, salinity, radioactivity, displacements, vibrations, pH, resistivity, sand content, thermal conductivity, or any combination of the above, and/or in which the sensors measure one or more of the following structural properties of the wellbore casing or tubing: shock, vibrations, inclinations, magnetic properties, electrical properties, tool-face or other type of tool orientation, as well as stress and strain properties or any combination of the above., and/or in which the sensor further measures one or more annuli or open hole properties on the outside of the wellbore, which properties may be selected from: pressure, temperature, resistivity, density, ph, electro- magnetic and/or electrical fields, radioactivity, salinity, sound, sound velocity, thermal conductivity, as well as other chemical and physical properties.

11. Apparatus as claimed in any preceding claim, further comprising:
means to induce a response from the surroundings, which means may be selected from: a magnetic field source, an electric field source, sound waves, pressure, temperature, shear-force waves, other final element or actuator part of downhole process control, final element or actuator used towards formation to assist any of above listed measurements,
and/or one or more of: noise cancelling of parameter offsets due to offset created by the well process or environment; prediction and correction of measurements due to gradients induced by the environment or well process system, in order to provide correct as well as real-time monitor of the pressure integrity and status of the well.

12. A method of monitoring pressure outside a wellbore casing (2) of a well, said method comprising:
installing a Wireless Sensor Unit (WSU) (1) including a sensor device (10) at a location on the outside section of a non-magnetic casing (20) of a wellbore;
installing an internal Sensor Energizer Unit (SEU) (9) inside the wellbore casing (2), adjusting the elevation of the SEU using a threaded connection so that the elevation of the SEU (9) is the same as the WSU (1) outside the wellbore, wherein the SEU (9) is used for power and communication (100) with the WSU (1);
powering the WSU (1) by Power Harvesting (100) where the frequency of the induction signal is in the range of 10-1000 Hz for deep penetration through the non-magnetic casing (20);
converting the dc power supplied to the SEU (9) on a cable (97) from the surface to an alternating electromagnetic field (100) that provides source of power for the WSU (1) outside the casing (2);
using an electromagnetic modulation technique to provide communication of data between the SEU (9) and the WSU (1).

13. A method as claimed in claim 12, in which all sensors (10 a, b, c) of the WSU (1) are permanently fixed on the outside of the wellbore casing without compromising the pressure integrity of the well or barrier, and in which the sensors (10a,b,c) may measure one or more parameters of the annuli to which it is exposed.

14. A method as claimed in any one of claims 12 to 13, in which the sensors 10 are not part of the WSU (1) but are branched-off and connected to a common electrical wire harness (97) attached to the outside of the casing (2), and in which the wiring harness (97) may be a single or multi- conductor type downhole cable (TEC).

15. A method as claimed in any one of Claims 12 to 14 wherein the sensors (10a,b,c) of the WSU (1) are part of a wellbore pressure containment system (fluidic system) facing an outer or outside wellbore casing system or are cemented in place facing an outer or outside wellbore casing.

16. A method as claimed in any one of claims 12 to 15, in which one or more power harvesting coils (11 a-f) is spaced out over a given section of the non magnetic casing (2);
the mentioned coiled-section (from above) or band of the nonmagnetic casing (20) provides the required completion or space-out tolerance for system when landing the well tubing (tubing-hanger) in the wellhead or tree

17. A method as claimed in any one of claims 12 to 16, in which the WSU (1) further includes or is connected to a secondary energy source, such as a battery or a downhole generator to provide additional power as required to assist the power harvesting.

18. method as claimed in any one of claims 12 to 17, in which the SEU (9) has at least one sensor (95) to measure parameter inside the wellbore casing (2) or tubing (7) to which it is attached, and wherein the sensors 95 may be an integral part of the SEU (9) or branched-off from the SEU 9 and connected to a common electrical wiring harness 97, or a combination of integral sensor and sensors branched-off.

19. A method as claimed in any one of claims 12 to 18, in which the sensors measure one or more properties selected from pressure, temperature, flow quantity, flow velocity, flow direction, turbidity, composition, oil level, oil-water interface level, density, salinity, radioactivity, displacements, vibrations, pH, resistivity, sand content, thermal conductivity, as well as other chemical and physical properties, and/or in which the sensors measure one or more of the structural components of the wellbore casing or tubing as follows: Shock, vibrations, inclinations, magnetic properties, electrical properties, tool-face or other type of tool orientation, as well as stress and strain properties, and/or in which the sensor further measures one or more annuli or open hole properties on the outside of the wellbore casing, selected from: pressure, temperature, resistivity, density, pH, electro- magnetic and/or electrical fields, radioactivity, salinity, sound, sound velocity, thermal conductivity, as well as other chemical and physical properties.

20. A method as claimed in any one of claims 12 to 19, in which a response is induced in the surroundings by one or more of the following means: magnetic fields, electric fields, sound waves, pressure, temperature, shear- force waves, other final element or actuator part of downhole process control, final element or actuator used towards formation to assist any of above listed measurements.

21. A method as claimed in any one of claims 12 to 20, further including one or more of:
noise cancelling of parameter offsets due to offset created by the well process or environment; prediction and correction of measurements due to gradients induced by the environment or well process system, in order to provide correct as well as real-time monitor of the pressure integrity and status of the well.

## Patentansprüche

1. Vorrichtung zum Vorsehen einer Überwachung des Drucks an der Außenseite des Bohrloch-Gehäuses (2) einer Quelle, welche Vorrichtung aufweist:
eine drahtlose Sensor-Einheit (WSU) (1), die an der Außenseite eines Abschnitts eines unmagnetischen Gehäuses (20) platziert ist, welche WSU eine Sensor-Einrichtung (10) aufweist, um den Druck und/oder die Temperatur ihrer Umgebung zu messen, wobei die WSU (1) in jeder Höhe des Bohrlochs (6) installiert oder positioniert sein kann, und wobei die WSU (1) mittels Energiegewinnung (100) angetrieben wird, wobei die Frequenz des Induktionssignals im Bereich von 10-1000 Hz zum tiefen Eindringen durch das unmagnetische Gehäuse (20) liegt,
eine innere Sensor-Energiequellen-Einheit (SEU) (9), die im Inneren des Bohrloch-Gehäuses (2) platziert ist, welche SEU zum Antreiben und zur Kommunikation (100) mit der WSU (1) verwendet wird, und wobei die SEU (9) an einem Quellen-Verrohrungs- oder -Fertigstellungsprogramm durch eine Verrohrung (7) befestigt ist, die ein Gewinde (93) hat, welches das Einstellen ihrer Höhe ermöglicht, und wobei die SEU (9) die an einem Kabel (97) von der Oberfläche gelieferte Gleichstromleistung in ein elektromagnetisches Wechselfeld (100) umwandelt, das eine Energiequelle für die WSU (1) an der Außenseite des Gehäuses (2) vorsieht;
wobei die SEU (9) und die WSU (1) eine elektromagnetische Modulationstechnik verwenden, um eine Daten-Kommunikation zwischen den beiden Komponenten vorzusehen.

2. Vorrichtung nach Anspruch 1, wobei die SEU (9) so angeordnet ist, dass sie sich auf der gleichen Höhe befindet wie die äußere WSU (1).

3. Vorrichtung nach Anspruch 1 oder 2, wobei der Sensor (10) in der Nähe der Bohrlochmündung oder der Steigrohrkopf-Konstruktion des Bohrlochs angebracht ist.

4. Vorrichtung nach einem vorhergehenden Anspruch, wobei zwei oder mehrere Sensoren (10) in der WSU (1) vorhanden sind, und wobei alle Sensoren (10 a, b, c) der WSU (1) an der Außenseite des Bohrloch-Gehäuses platziert sein können, ohne die Druck-Integrität der Quelle zu beeinträchtigen.

5. Vorrichtung nach einem vorhergehenden Anspruch, wobei die Drucksensoren (10a, b, c) einen oder mehrere Parameter der Ringräume (3, 8), welchen sie ausgesetzt sind, messen.

6. Vorrichtung nach einem vorhergehen Anspruch, wobei die Sensoren (10) von der WSU (1) abgezweigt und mit einem gemeinsamen elektrischen Kabelstrang (97) verbunden sind, der an der Außenseite des Gehäuses (2) befestigt ist, wobei der Kabelstrang (97) entweder vom Einzel- oder vom Mehrleiter-Bohrlochkabel-Typ (TEC) ist.

7. Vorrichtung nach einem vorhergehenden Anspruch, welche weiters eine oder mehrere Energiegewinnungswicklungen (11 a-f) aufweist, die über einen bestimmten Abschnitt des unmagnetischen Gehäuses (2) verteilt sind.

8. Vorrichtung nach einem vorhergehen Anspruch, wobei die WSU (1) eine sekundäre Energiequelle aufweist oder mit dieser verbunden ist, wie eine Batterie oder einen Bohrloch-Generator.

9. Vorrichtung nach einem vorhergehen Anspruch, wobei die SEU (9) weiters einen oder mehrere Sensoren (95) aufweist, um Parameter innerhalb des Bohrloch-Gehäuses (2) oder der Verrohrung (7), woran sie befestigt ist, zu messen, und wobei die Sensoren (95) ein integraler Teil der SEU (9) oder von der SEU (9) abgezweigt und mit einem gemeinsamen elektrischen Kabelstrang (97) verbunden oder eine Kombination aus integralem Sensor und abgezweigten Sensoren sein können, und wobei der Kabelstrang (97) vom Einzel- oder Mehrleiter-Bohrlochkabel-Typ (TEC) sein kann.

10. Vorrichtung nach einem vorhergehenden Anspruch, wobei die Sensoren eine oder mehrere der folgenden Eigenschaften messen: Druck, Temperatur, Durchflussmenge, Fließgeschwindigkeit, Fließrichtung, Turbidität, Zusammensetzung, Öl-Höhe, Öl-Wasser-Trennschicht-Höhe, Dichte, Salinität, Radioaktivität, Verdrängungen, Vibrationen, pH-Wert, Widerstandsfähigkeit, Sandgehalt, Wärmeleitfähigkeit oder jegliche Kombination der obigen, und/oder wobei die Sensoren eine oder mehrere der folgenden Konstruktionseigenschaften von Bohrloch-Gehäuse oder Verrohrung messen: Erschütterung, Vibrationen, Neigungen, magnetische Eigenschaften, elektrische Eigenschaften, Werkzeug-Fläche oder eine andere Art von Werkzeug-Ausrichtung, sowie Spannungs- und Dehnungseigenschaften oder jegliche Kombination der obigen, und/oder wobei der Sensor weiters eine oder mehrere Eigenschaften der Ringräume oder des offenen Lochs an der Außenseite des Bohrlochs misst, welche Eigenschaften ausgewählt sein können aus: Druck, Temperatur, Widerstandsfähigkeit, Dichte, pH-Wert, elektromagnetische und/oder elektrische Felder, Radioaktivität, Salinität, Schall, Schallgeschwindigkeit, Wärmeleitfähigkeit sowie andere chemische und physikalische Eigenschaften.

11. Vorrichtung nach einem vorhergehen Anspruch, welche weiters umfasst:
Mittel zum Induzieren einer Reaktion von der Umgebung, welche Mittel ausgewählt sein können aus: einer Magnetfeldquelle, einer Quelle eines elektrischen Feldes, Schallwellen, Druck, Temperatur, Scherkraftwellen, einem anderen Endelement oder Bedienungsteil der Bohrloch-Prozess-Steuerung, einem Endelement oder Bedienungselement, das für die Anordnung benützt wird, um jegliche der oben aufgezählten Messungen zu unterstützen,
und/oder eines oder mehrere von: Rauschunterdrückung von Parameter-Versetzungen infolge einer Versetzung, die durch den Bohrloch-Prozess oder die Umgebung erzeugt ist; Vorhersage und Korrektur von Messungen infolge von Gradienten, die durch die Umgebung oder durch das Bohrloch-Prozess-System induziert sind, um eine korrekte sowie eine Echtzeit-Überwachung der Druck-Integrität und des Status der Quelle vorzusehen.

12. Verfahren zum Überwachen des Drucks an der Außenseite eines Bohrloch-Gehäuses (2) einer Quelle, welches Verfahren umfasst:
Einbauen einer drahtlosen Sensor-Einheit (WSU) (1) einschließlich einer Sensor-Einrichtung (10) an einer Stelle am äußeren Abschnitt eines unmagnetischen Gehäuses (20) eines Bohrlochs;
Einbauen einer inneren Sensor-Energiequellen-Einheit (SEU) (9) im Inneren des Bohrloch-Gehäuses (2), Einstellen der Höhe der SEU unter Verwendung einer Schraubverbindung, so dass die Höhe der SEU (9) die gleiche ist wie die der WSU (1) an der Außenseite des Bohrlochs, wobei die SEU (9) zum Antreiben und zur Kommunikation (100) mit der WSU (1) verwendet wird;
Antreiben der WSU (1) mittels Energiegewinnung (100), wobei die Frequenz des Induktionssignals im Bereich von 10-1000 Hz zum tiefen Eindringen durch das unmagnetische Gehäuse (20) liegt;
Umwandeln der der SEU (9) auf einem Kabel (97) von der Oberfläche gelieferten Gleichstromleistung in ein elektromagnetisches Wechselfeld (100), das eine Energiequelle für die WSU (1) an der Außenseite des Gehäuses (2) vorsieht;
Verwenden einer elektromagnetischen Modulationstechnik, um eine Daten-Kommunikation zwischen der SEU (9) und der WSU (1) vorzusehen.

13. Verfahren nach Anspruch 12, wobei alle Sensoren (10 a, b, c) der WSU (1) an der Außenseite des Bohrloch-Gehäuses permanent fixiert sind, ohne die Druck-Integrität der Quelle oder der Barriere zu beeinträchtigen, und wobei die Sensoren (10a, b, c) einen oder mehrere Parameter der Ringräume, welchen sie ausgesetzt sind, messen können.

14. Verfahren nach einem der Ansprüche 12 oder 13, wobei die Sensoren (10) nicht Teil der WSU (1) sondern abgezweigt und mit einem gemeinsamen elektrischen Kabelstrang (97) verbunden sind, der an der Außenseite des Gehäuses (2) befestigt ist, und wobei der Kabelstrang (97) vom Einzel- oder Mehrleiter-Bohrlochkabel-Typ (TEC) sein kann.

15. Verfahren nach einem der Ansprüche 12 bis 14, wobei die Sensoren (10a, b, c) der WSU (1) Teil eines Bohrloch-Druckeindämmungssystems (fluidisches System) sind, das einem äußeren oder an der Außenseite befindlichen Bohrloch-Gehäusesystem zugewandt ist, oder an Ort und Stelle einzementiert sind, wobei sie einem äußeren oder an der Außenseite befindlichen Bohrloch-Gehäuse zugewandt sind.

16. Verfahren nach einem der Ansprüche 12 bis 15, wobei eine oder mehrere Energiegewinnungswicklungen (11 α-f) über einen bestimmten Abschnitt des unmagnetischen Gehäuses (2) verteilt sind;
der erwähnte Wicklungs-Abschnitt (von oben) oder das Band des unmagnetischen Gehäuses (20) die benötigte Komplettierung oder Verteilungs-Toleranz für das System vorsieht, wenn die Quellen-Verrohrung (Steigrohrhänger) in der Bohrlochmündung oder im Steigrohrkopf eingebracht wird.

17. Verfahren nach einem der Ansprüche 12 bis 16, worin die WSU (1) weiters eine sekundäre Energiequelle aufweist oder mit dieser verbunden ist, wie eine Batterie oder einen Bohrloch-Generator, um je nach Bedarf zusätzliche Energie vorzusehen, um die Energiegewinnung zu unterstützen.

18. Verfahren nach einem der Ansprüche 12 bis 17, wobei die SEU (9) mindestens einen Sensor (95) aufweist, um Parameter innerhalb des Bohrloch-Gehäuses (2) oder der Verrohrung (7), woran sie befestigt ist, zu messen, und wobei die Sensoren (95) ein integraler Teil der SEU (9) oder von der SEU (9) abgezweigt und mit einem gemeinsamen elektrischen Kabelstrang (97) verbunden oder eine Kombination von integralem Sensor und abgezweigten Sensoren sein können.

19. Verfahren nach einem der Ansprüche 12 bis 18, wobei die Sensoren eine oder mehrere Eigenschaften messen, ausgewählt aus Druck, Temperatur, Durchflussmenge, Fließgeschwindigkeit, Fließrichtung, Turbidität, Zusammensetzung, Öl-Höhe, Öl-Wasser-Trennschicht-Höhe, Dichte, Salinität, Radioaktivität, Verdrängungen, Vibrationen, pH-Wert, Widerstandsfähigkeit, Sandgehalt, Wärmeleitfähigkeit sowie andere chemische und physikalische Eigenschaften, und/oder wobei die Sensoren eine oder mehrere der Konstruktionskomponenten des Bohrloch-Gehäuses oder der Verrohrung messen, wie folgt: Erschütterung, Vibrationen, Neigungen, magnetische Eigenschaften, elektrische Eigenschaften, Werkzeug-Fläche oder eine andere Art von Werkzeug-Ausrichtung, sowie Spannungs- und Dehnungseigenschaften, und/oder wobei der Sensor weiters eine oder mehrere Eigenschaften der Ringräume oder des offenen Lochs an der Außenseite des Bohrloch-Gehäuses misst, ausgewählt aus: Druck, Temperatur, Widerstandsfähigkeit, Dichte, pH-Wert, elektromagnetische und/oder elektrische Felder, Radioaktivität, Salinität, Schall, Schallgeschwindigkeit, Wärmeleitfähigkeit sowie andere chemische und physikalische Eigenschaften.

20. Verfahren nach einem der Ansprüche 12 bis 19, wobei eine Reaktion in der Umgebung mit einem oder mehreren der folgenden Mittel induziert wird: Magnetfeldern, elektrischen Feldern, Schallwellen, Druck, Temperatur, Scherkraftwellen, einem anderen Endelement oder Bedienungsteil der Bohrloch-Prozess-Steuerung, einem Endelement oder Bedienungselement, das für die Anordnung benützt wird, um jegliche der oben aufgezählten Messungen zu unterstützen.

21. Verfahren nach einem der Ansprüche 12 bis 20, welches weiters eines oder mehreres umfasst von: Rauschunterdrückung von Parameter-Versetzungen infolge einer Versetzung, die durch den Bohrloch-Prozess oder die Umgebung erzeugt ist; Vorhersage und Korrektur von Messungen infolge von Gradienten, die durch die Umgebung oder das Bohrloch-Prozess-System induziert sind, um eine korrekte sowie eine Echtzeit-Überwachung der Druck-Integrität und des Status der Quelle vorzusehen.

## Revendications

1. Appareil pour fournir une surveillance de pression à l'extérieur du tubage de forage (2) d'un puits, ledit appareil comprenant :
une unité de capteur sans fil (« Wireless Sensor Unit » ou WSU) (1), positionnée à l'extérieur d'une section d'un tubage non magnétique (20), ladite WSU comprenant un dispositif capteur (10) pour mesurer la pression et/ou la température de ses environs, dans lequel la WSU (1) peut être installée ou positionnée à une quelconque élévation du forage (6) et dans lequel la WSU (1) est alimentée par récupération d'énergie (100) où la fréquence du signal d'induction est dans la plage de 10 à 1000 Hz pour pénétration profonde à travers le tubage non magnétique (20) ;
une unité de mise sous tension de capteur (« Sensor Energizer Unit » ou SEU) interne (9) positionnée à l'intérieur du tubage de forage (2), ladite SEU étant utilisée pour l'alimentation et la communication (100) avec la WSU (1), et dans lequel la SEU (9) est fixée à une colonne de production de puits ou un programme de complétion par une colonne de production (7) comportant un filet (93) qui permet le réglage de son élévation, et dans lequel la SEU (9) convertit l'alimentation en courant continu fournie sur un câble (97) à partir de la surface en un champ électromagnétique alternatif (100) qui fournit une source d'alimentation en énergie électrique pour la WSU (1) à l'extérieur du tubage (2) ;
dans lequel la SEU (9) et la WSU (1) utilisent une technique de modulation électromagnétique pour fournir une communication de données entre les deux composants.

2. Appareil selon la revendication 1, dans lequel la SEU (9) est agencée pour être à la même élévation que celle de la WSU externe (1).

3. Appareil selon la revendication 1 ou la revendication 2, dans lequel le capteur (10) est monté près de la tête de puits ou de la structure d'arbre du forage.

4. Appareil selon une quelconque revendication précédente, dans lequel il y a deux, ou plus, capteurs (10) dans la WSU (1), et dans lequel tous les capteurs (10a, b, c) de la WSU (1) peuvent être positionnés sur l'extérieur du tubage de forage sans compromettre l'intégrité de pression du puits.

5. Appareil selon une quelconque revendication précédente, dans lequel les capteurs de pression (10a, b, c) mesurent un ou plusieurs paramètres des espaces annulaires (3, 8) auxquels ils sont exposés.

6. Appareil selon une quelconque revendication précédente, dans lequel les capteurs (10) bifurquent de la WSU (1) et sont connectés à un faisceau électrique commun (97) fixée à l'extérieur du tubage (2), le faisceau électrique (97) étant un câble (« Tubing Electric Cable », ou câble électrique de colonne de production, ou TEC) en fond de trou à conducteur unique ou multiple.

7. Appareil selon une quelconque revendication précédente, comprenant en outre une ou plusieurs bobines de récupération d'énergie (11 a-f) espacées sur une section donnée du tubage non magnétique (2).

8. Appareil selon une quelconque revendication précédente, dans lequel la WSU (1) comprend ou est connectée à une source d'énergie secondaire, telle qu'une batterie ou qu'un générateur en fond de trou.

9. Appareil selon une quelconque revendication précédente, dans lequel la SEU (9) comprend en outre un ou plusieurs capteurs (95) pour mesurer des paramètres à l'intérieur du tubage de forage (2) ou de la colonne de production (7) auquel elle est fixée, et dans lequel les capteurs (95) peuvent être une partie intégrante de la SEU (9), ou peuvent bifurquer de la SEU (9) et peuvent être connectés à un faisceau électrique commun (97), ou peuvent être une association de capteurs intégrés et de capteurs en bifurcation, et dans lequel le faisceau électrique (97) peut être un câble (« Tubing Electric Cable », ou câble électrique de colonne de production, ou TEC) en fond de trou à conducteur unique ou multiple.

10. Appareil selon une quelconque revendication précédente, dans lequel les capteurs mesurent une ou plusieurs des propriétés suivantes : la pression, la température, la quantité d'écoulement, la vitesse d'écoulement, la direction d'écoulement, la turbidité, la composition, le niveau de pétrole, le niveau d'interface pétrole-eau, la densité, la salinité, la radioactivité, les déplacements, les vibrations, le pH, la résistivité, la teneur en sable, la conductivité thermique, ou une quelconque association de ce qui précède, et/ou dans lequel les capteurs mesurent une ou plusieurs des propriétés structurelles suivantes du tubage de forage ou de la colonne de production : le choc, les vibrations, les inclinaisons, les propriétés magnétiques, les propriétés électriques, la face d'outil ou autre type d'orientation d'outil, ainsi que des propriétés d'effort et de contrainte ou une association quelconque de ce qui précède, et/ou dans lequel le capteur mesure en outre une ou plusieurs propriétés d'espaces annulaires ou de trou découvert sur l'extérieur du forage, lesquelles propriétés peuvent être sélectionnées parmi : la pression, la température, la résistivité, la densité, le pH, les champs électromagnétiques et/ou électriques, la radioactivité, la salinité, le son, la vitesse du son, la conductivité thermique, ainsi que d'autres propriétés chimiques et physiques.

11. Appareil selon une quelconque revendication précédente, comprenant en outre :
des moyens pour entraîner une réponse à partir des environs, lesquels moyens peuvent être sélectionnés parmi : une source de champ magnétique, une source de champ électrique, des ondes sonores, une pression, une température, des ondes de force de cisaillement, un autre élément ou actionneur final de commande de procédé en fond de trou, élément ou actionneur final utilisé vers la formation pour aider une quelconque des mesures dont la liste est fournie ci-dessus,
et/ou un ou plusieurs éléments parmi : l'élimination de bruit de paramètres décalés dus à un décalage créé par le procédé ou l'environnement de puits ; la prédiction et la correction de mesures dues à des gradients entraînés par l'environnement ou le système de procédé de puits, afin de fournir une surveillance correcte ainsi qu'en temps réel de l'intégrité de pression et de l'état du puits.

12. Procédé de surveillance de pression à l'extérieur d'un tubage de forage (2) d'un puits, ledit procédé comprenant :
l'installation d'une unité de capteur sans fil (« Wireless Sensor Unit » ou WSU) (1) comprenant un dispositif capteur (10) dans un emplacement sur la section extérieure d'un tubage non magnétique (20) d'un forage ;
l'installation d'une unité de mise sous tension de capteur (« Sensor Energizer Unit ») interne (9) à l'intérieur du tubage de forage (2), en réglant l'élévation de la SEU en utilisant un raccordement fileté de sorte que l'élévation de la SEU (9) soit la même que celle de la WSU (1) à l'extérieur du forage, dans lequel la SEU (9) est utilisée pour l'alimentation et la communication (100) avec la WSU (1) ;
l'alimentation de la WSU (1) par récupération d'énergie (100) où la fréquence du signal d'induction est dans la plage de 10 à 1000 Hz pour pénétration profonde à travers le tubage non magnétique (20) ;
la conversion de l'alimentation en courant continu fournie à la SEU (9) sur un câble (97) à partir de la surface en un champ électromagnétique alternatif (100) qui fournit une source d'alimentation en énergie électrique pour la WSU (1) à l'extérieur du tubage (2) ;
l'utilisation d'une technique de modulation électromagnétique pour fournir une communication de données entre la SEU (9) et la WSU (1).

13. Procédé selon la revendication 12, dans lequel tous les capteurs (10a, b, c) de la WSU (1) sont fixés en permanence sur l'extérieur du tubage de forage sans compromettre l'intégrité de pression du puits ou d'une barrière, et dans lequel les capteurs (10a, b, c) peuvent mesurer un ou plusieurs paramètres des espaces annulaires auxquels ils sont exposés.

14. Procédé selon une quelconque des revendications 12 à 13, dans lequel les capteurs (10) ne font pas partie de la WSU (1) mais bifurquent et sont connectés à un faisceau électrique commun (97) fixé à l'extérieur du tubage (2), et dans lequel le faisceau électrique (97) peut être un câble (« Tubing Electric Cable », ou câble électrique de colonne de production, ou TEC) en fond de trou à conducteur unique ou multiple.

15. Procédé selon une quelconque des revendications 12 à 14, dans lequel les capteurs (10a, b, c) de la WSU (1) font partie d'un système de confinement de pression de forage (système fluidique) en face d'un système de tubage de forage extérieur ou externe ou sont cimentés en place en face d'un tubage de forage extérieur ou externe.

16. Procédé selon une quelconque des revendications 12 à 15, dans lequel une ou plusieurs bobines de récupération d'énergie (11 a-f) sont espacées sur une section donnée du tubage non magnétique (2) ;
la section spiralée mentionnée (à partir du dessus) ou bande du tubage non magnétique (20) fournit la tolérance requise de complétion ou d'espacement pour le système lors du positionnement de la colonne de production de puits (du dispositif de suspension de colonne de production) dans la tête de puits ou l'arbre.

17. Procédé selon une quelconque des revendications 12 à 16, dans lequel la WSU (1) comprend en outre ou est connectée à une source d'énergie secondaire, telle qu'une batterie ou qu'un générateur en fond de trou pour fournir de l'énergie supplémentaire si nécessaire pour aider la récupération d'énergie.

18. Procédé selon une quelconque des revendications 12 à 17, dans lequel la SEU (9) comporte au moins un capteur (95) pour mesurer un paramètre à l'intérieur du tubage de forage (2) ou la colonne de production (7) auquel elle est fixée, et dans lequel les capteurs (95) peuvent être une partie intégrante de la SEU (9) ou bifurquer de la SEU (9) et connectés à un faisceau électrique commun (97), ou peuvent être une association de capteurs intégrés et de capteurs en bifurcation.

19. Procédé selon une quelconque des revendications 12 à 18, dans lequel les capteurs mesurent une ou plusieurs propriétés sélectionnées parmi la pression, la température, la quantité d'écoulement, la vitesse d'écoulement, la direction d'écoulement, la turbidité, la composition, le niveau de pétrole, le niveau d'interface pétrole-eau, la densité, la salinité, la radioactivité, les déplacements, les vibrations, le pH, la résistivité, la teneur en sable, la conductivité thermique, ainsi que d'autres propriétés chimiques et physiques, et/ou dans lequel les capteurs mesurent un ou plusieurs des composants structurels du tubage de forage ou colonne de production comme suit : le choc, les vibrations, les inclinaisons, les propriétés magnétiques, les propriétés électriques, la face d'outil ou un autre type d'orientation d'outil, ainsi que des propriétés d'effort et de contrainte, et/ou dans lequel le capteur mesure en outre une ou plusieurs propriétés d'espaces annulaires ou de trou découvert sur l'extérieur du tubage de forage, sélectionnées parmi : la pression, la température, la résistivité, la densité, le pH, les champs électromagnétiques et/ou électriques, la radioactivité, la salinité, le son, la vitesse du son, la conductivité thermique, ainsi que d'autres propriétés chimiques et physiques.

20. Procédé selon une quelconque des revendications 12 à 19, dans lequel une réponse est entraînée dans les environs par un ou plusieurs des moyens suivantes : des champs magnétiques, des champs électriques, des ondes sonores, une pression, une température, des ondes de force de cisaillement, un autre élément ou actionneur final de commande de procédé en fond de trou, un élément ou actionneur final utilisé vers la formation pour aider une quelconque des mesures dont la liste est fournie ci-dessus.

21. Procédé selon une quelconque des revendications 12 à 20, comprenant en outre un ou plusieurs éléments parmi : l'élimination de bruit de paramètres décalés dus à un décalage créé par le procédé ou l'environnement de puits ; la prédiction et la correction de mesures dues à des gradients entraînés par l'environnement ou le système de procédé de puits, afin de fournir une surveillance correcte ainsi qu'en temps réel de l'intégrité de pression et de l'état du puits.
